**Europäisches Patentamt**

**European Patent Office**

**Office européen des brevets**

(19)

(11) Veröffentlichungsnummer: **0 470 510 B1**

# EUROPÄISCHE PATENTSCHRIFT

(12)

(45) Veröffentlichungstag der Patentschrift: **04.01.95**

(51) Int. Cl.6: **B29C 45/18**, B29C 47/10

(21) Anmeldenummer: **91112988.0**

(22) Anmeldetag: **02.08.91**

(54) **Vorrichtung zum Beschicken von Spritzgiess- und Extrudereinheiten.**

(30) Priorität: **07.08.90 DE 4024994**

(43) Veröffentlichungstag der Anmeldung:
**12.02.92 Patentblatt  92/07**

(45) Bekanntmachung des Hinweises auf die
Patenterteilung:
**04.01.95 Patentblatt  95/01**

(84) Benannte Vertragsstaaten:
**CH DE ES FR GB IT LI**

(56) Entgegenhaltungen:
**EP-A- 0 286 972**
**DD-A- 206 343**
**DE-A- 2 218 353**
**GB-A- 1 008 429**
**US-A- 3 633 494**

**PATENT ABSTRACTS OF JAPAN vol. 7, no.
250 (M-254)(1395) 8. November 1983 & JP-
A-58 134 704 (NISSAN KAGAKU KOGYO)**

**PATENT ABSTRACTS OF JAPAN vol. 10, no.
261 (M-514)(2317) 5. September 1986 & JP-
A-61 086 218 (AKUTORONIKUSU)**

**PATENT ABSTRACTS OF JAPAN vol. 9, no.
272 (M-425)(1995) 30. Oktober 1985 & JP-A-60**

**116 424 (MITSUBISHI JUKOGYO)**

(73) Patentinhaber: **Krauss-Maffei Aktiengesellschaft**
**Krauss-Maffei-Strasse 2**
**D-80997 München (DE)**

(72) Erfinder: **Meixner, Franz, Ing.**
**Strahlenfelserstrasse 20**
**W-8000 München 50 (DE)**
Erfinder: **Brams, Peter, Ing.-grad.**
**Waldmeisterstrasse 44a**
**W-8000 München 45 (DE)**
Erfinder: **Schultheis, Sven, Dr.-Ing.**
**Galileistrasse 2 L**
**W-8900 Augsburg 21 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Beschicken von Spritzgieß- und Extrudereinheiten gemäß dem Oberbegriff des Patentanspruchs 1.

Eine derartige Vorrichtung ist nach der DE-PS 37 12 828 bzw. nach dem Dokument EP-A-0 286 972 bekannt. Hiernach ist die Förderschnecke an ihrem Austragsende mit einem Rohrkrümmer zur Überführung des geförderten Materials in die Spritzgießeinheit versehen. Bei der Verarbeitung von zähfließenden Materialien, insbesondere von glasfaserbeladenem Polyester in Kunststoffverarbeitungsmaschinen mit einer derartigen bekannten Anordnung hat der Materialfluß einen erheblichen Widerstand zu überwinden. Dieser Widerstand muß durch hohen Druck (ca. 60-70 bar) und erhöhte Antriebsleistung überwunden werden. Die Förderleistung pro Zeiteinheit und der Füllgrad werden beeinträchtigt. Insbesondere besteht die Gefahr der Faserschädigung. Aus diesem Grunde müssen z.B. glasfaserbeladene Kunststofformteile, wie sie zunehmend in der Automobilindustrie zum Einsatz kommen, aufwendig in mehreren Arbeitsgängen hergestellt werden. In bekannter Weise werden zunächst ebene Matten hergestellt, die dann unter hohem Druck und hoher Temperatur in entsprechende Formen gepreßt werden.

Nach dem Dokument DE-A-22 18 353 ist eine Spritzeinheit für Spritzgießmaschinen mit einer Förderschnecke im Plastifizierzylinder, der von einem Materialbehälter aus über einen Einzugskanal mit Kunststoff beschickt wird, bekannt. In dem Materialbehälter ist eine Förderschnecke angeordnet, die über den Einzugskanal in den Plastifizierzylinder mündet.

Der Erfindung liegt die Aufgabe zugrunde, eine Beschickungsvorrichtung der eingangs genannten Art dahingehend zu verbessern, daß eine möglichst faserschonende, ungehinderte, kontinuierliche Weiterführung des Materials von der Förderschnecke zur Dosierschnecke bzw. in den Kolbenvorraum von Kolbenspritzgießmaschinen erreicht wird.

Diese Aufgabe wird gemäß den Merkmalen des Patentanspruchs 1 gelöst. Hierdurch werden gegenüber der eingangs genannten bekannten Vorrichtung mehrere Vorteile erzielt. Bei reduzierter Antriebsleistung werden relativ niedrige Drücke (ca. 5-10 bar) benötigt. Der spezifische Durchsatz wird erhöht. Hierdurch kann z.B. bei Spritzgießmaschinen die Taktzeit verkürzt werden. Der Füllgrad wird verbessert und eine genaue Volumendosierung ermöglicht. Bei einer Aufheizung des Einfülltrichters und der Förderschnecke ist es z.B. möglich, entweder Kunststoff-Recyclingmaterialallein oder zusammen mit anderen Kunststoffen zu verarbeiten, woraus dann neue Kunststoffartikel hergestellt werden können. Das gleiche gilt auch für die Verarbeitung sonstiger Füllstoffe. Insbesondere können auf diese Weise glasfaserverstärkte Kunststoff-Formteile nunmehr besonders faserschonend im Spritzgießverfahren hergestellt werden.

Weitere vorteilhafte Ausgestaltungen der Erfindung sind in den Unteransprüchen dargelegt.

Das zu verarbeitende Material wird über den Einfüllschacht der Beschickungseinheit dem Trichter zugeführt. Nach Schließen des Trichters ist die eingefüllte Masse gasdicht von der Umgebung getrennt. Flüchtige Bestandteile wie z.B. Styrol bei der Verarbeitung von Naßpolyester oder Wasserdampf bei der Verarbeitung von glasfaserverstärkten Polyamiden können hier gezielt abgesaugt werden. Zur Aufrechterhaltung einer gezielten Massetemperatur der zu verarbeitenden Masse ist die Vorrichtung temperierbar. Dadurch kann z.B. bei der Verarbeitung von glasfaserverstärkten Polypropylen die Beschickungstemperatur von ungefähr 200° C konstant gehalten werden. Die Förderschnecke der Zuführeinheit zieht das zu verarbeitende Material faserschonend ein und fördert es zum Verarbeitungsaggregat. Die gleichbleibende Förderleistung wird durch die Regelung der Förderschneckendrehzahl über einen Drucksensor im Schneckenvorraum dieser Förderschnecke gewährleistet.

Durch die Anordnung und Führung der Förderschnecke im Einfülltrichter und in Bezug zur anschließenden Dosierschnecke wird erreicht, daß die zu verarbeitende Masse vom Eintritt in die zylindrische Führung der Förderschnecke bis zum Austritt aus der Dosierschnecke weitgehend ohne Toträume in einem praktisch geschlossenen System bei gleichmäßigem Druckaufbau weitergeführt wird.

Bei Extrudereinheiten ist somit ein kontinuierlicher Betrieb mit gleichbleibendem Füllgrad gewährleistet. Bei Spritzgießeinheiten ist ein quasi kontinuierlicher Betrieb realisierbar.

In der Zeichnung sind zwei Ausführungsbeispiele der Erfindung dargestellt. Es zeigen:

Fig. 1    eine Beschickungsvorrichtung mit einer Dosierschnecke im Schnitt,

Fig. 2    das untere Ende der Förderschnecke mit einer Einzugstasche,

Fig. 3    eine Draufsicht gemäß Fig. 2,

Fig. 4    eine schematische Darstellung des Mündungsbereichs der Förderschnecke in die Dosierschnecke.

Fig. 5    ein zweites Ausführungsbeispiel

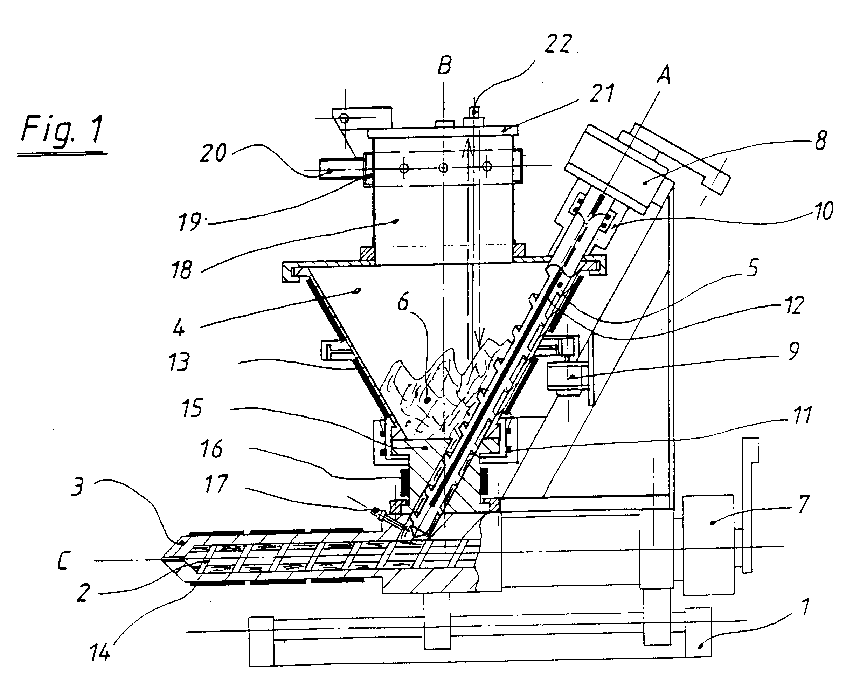

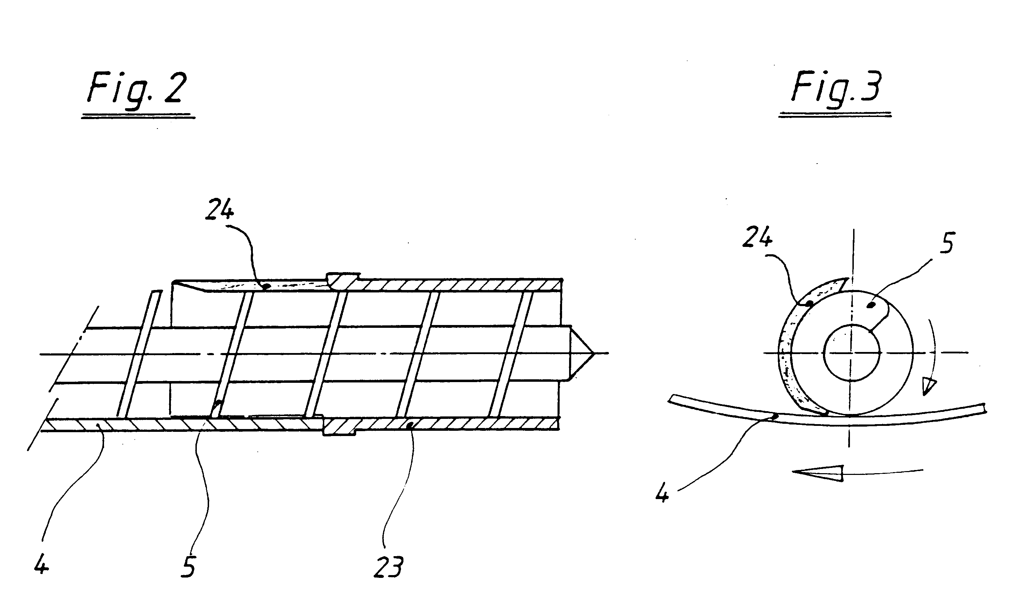

Gemäß Fig. 1 ist über einer Spritzgießeinheit 1 mit einer Dosierschnecke 2 und einem Schneckenzylinder 3 ein Einfülltrichter 4 mit einer Förderschnecke 5 angeordnet. Im Einfülltichter 4 befindet sich eine Füllmasse 6. Die Dosierschnecke 2 ist von einem Motor 7, die Förderschnecke 5 von einem Motor 8 und der Einfülltrichter 4 von einem Motor 9 angetrieben. Im Antriebsbereich der Förderschnecke 5 ist ein Schleifringkörper 10 und im unteren Bereich des Einfülltrichters 4 ein Schleifringkörper 11 für den Materialfluß der Temperiereinheiten beider Teile vorgesehen. Die Förderschnecke ist zu diesem Zweck mit einer Heizpatrone 12 zur Schneckeninnentemperierung versehen, der Einfülltrichter 4 mit einem Heizmantel 13 umgeben. Um den Schneckenzylinder 3 sind ein Heizmantel 14 und um eine Konsole 15 ein weiterer Heizmantel 16 angeordnet. An der Mündung der Förderschnecke 5 in die Dosierschnecke 2 ist ein Druckmeßsensor 17 zur Regelung der Drehzahl der Förderschnecke 5 eingesetzt. Über dem Einfülltrichter 4 ist ein Einfüllschacht 18 mit einem Absaugring 19 und einem Stutzen 20 sowie einem Beschickungsdeckel 21 angebracht. In diesen ist eine Füllstandsmeßeinrichtung 22 eingebaut. Gemäß Fig. 2 und 3 ist das untere Ende der Förderschnecke 5 in einer Zylinderbuchse 23 geführt und oberhalb davon mittels einer halbschalenförmigen Einzugstasche 24 gegen Durchbiegung abgestützt. Die Förderschnecke 5 und die Einzugstasche 24 liegen an der Mantelinnenfläche des Einfülltrichters 4 an, wobei die Pfeile die jeweilige Drehrichtung der Förderschnecke 5 und des Einfülltrichters 4 bezeichnen.

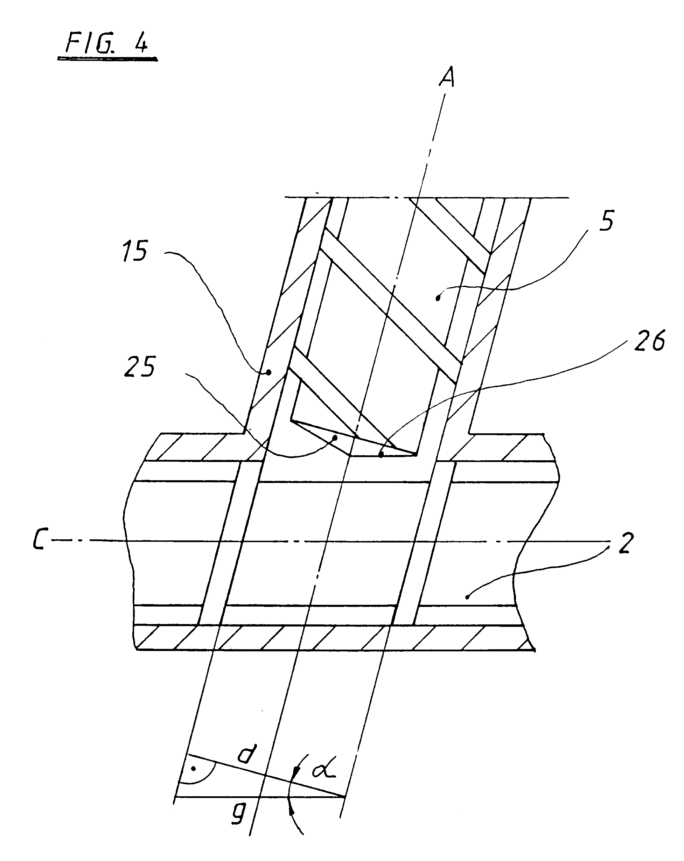

Gemäß Fig. 4 hat die Förderschnecke 5 eine kegelförmige Spitze 25 mit einer Mantelfläche 26. Der Durchmesser d der im Neigungswinkel $\alpha$ angeordneten Förderschnecke 5 entspricht der Gangsteigung g der Dosierschnecke $d = g \times \cos \alpha$.

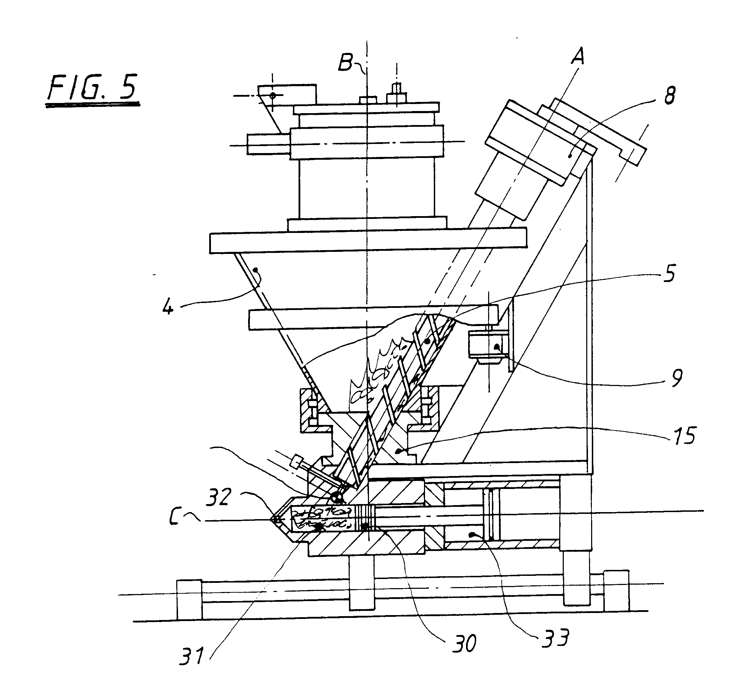

Fig. 5 zeigt die Anordnung einer Beschickungsvorrichtung über einer Kolben-Spritzgießmaschine.

**Patentansprüche**

1. Vorrichtung zum Beschicken von Spritzgieß- und Extrudereinheiten mit einer Förder- und/oder Dosierschnecke (5), z.B. bei Extrudern, oder einem Kolbenvorraum, z.B. bei Kolben-Spritzgießmaschinen, mit zähfließenden bzw. teigigen Materialien, insbesondere glasfaserbeladenen Kunststoffen, wie z.B. Polyester und Polypropylen, mit einem Einfülltrichter (4) und einer Förderschnecke (5), wobei der Einfülltrichter als Rotationskörper mit einem um eine Rotationsachse drehbaren Mantel ausgerüstet und die Förderschnecke durch den Rotationskörper im Bereich der Mantelinnenfläche und parallel hierzu hindurchgeführt ist, wobei die Förderschnecke direkt in die Dosierschnecke (2) bzw. in den Kolbenvorraum der Spritzgießeinheit (31) mündet, **dadurch gekennzeichnet,** daß die Längsachse (A) der Förderschnecke (5) im gleichen Neigungswinkel ($\alpha$) wie die Steigung der Dosierschnecke (2) angeordnet ist und der Durchmesser (d)

der im Neigungswinkel ($\alpha$) angeordneten Förderschnecke (5) der Gangsteigung (g) der Dosierschnecke (2) nach der Beziehung $d = g \times \cos \alpha$ entspricht.

2. Vorrichtung nach Anspruch 1, **dadurch gekennzeichnet,** daß die Förderschnecke (5) in ihrem unteren Bereich bis zur Mündung in die Dosierschnecke (2) in einer Konsole (15) zylindrisch geführt ist.

3. Vorrichtung nach Anspruch 2, **dadurch gekennzeichnet,** daß die zylindrische Führung der Förderschnecke (5) etwa 1/3 ihrer gesamten Förderlänge beträgt.

4. Vorrichtung nach den Ansprüchen 1 bis 3 oder einem derselben, **dadurch gekennzeichnet,** daß die Förderschnecke (5) mit einer kegelförmigen Spitze (25) versehen ist, derart, daß die Spitze (25) dicht an die Dosierschnecke (2) heranreicht und die Mantelfläche (26) des Kegels annähernd parallel zur Längsachse (C) der Dosierschnecke (2) verläuft.

5. Vorrichtung nach den Ansprüchen 1 bis 4 oder einem derselben, **dadurch gekennzeichnet,** daß die Achse (B) des Einfülltrichters (4) senkrecht zur Achse (C) der Dosierschnecke (2) verläuft.

6. Vorrichtung nach den Ansprüchen 1 bis 5 oder einem derselben, **dadurch gekennzeichnet,** daß die Förderschnecke (5) mittels einer dieselbe halbschrilenförmig umschließenden Einzugstasche (24) gegen Durchbiegung abgestützt ist.

7. Vorrichtung nach den Ansprüchen 1 bis 6 oder einem derselben, **dadurch gekennzeichnet,** daß der Einfülltrichter (4), die Konsole (15), die Förderschnecke (5) und die Dosierschnecke (2) temperierbar sind.

8. Vorrichtung nach Anspruch 7, **dadurch gekennzeichnet,** daß die Förderschnecke (5) mit einer Heizpatrone (12) zur Innentemperierung und der Einfülltrichter (4), die Konsole (15) und die Dosierschnecke (2) mit Heizmänteln (13,16,14) zur Außentemperierung versehen sind.

9. Vorrichtung nach den Ansprüchen 1 bis 8 oder einem derselben, **dadurch gekennzeichnet,** daß an der Mündung der Förderschnecke (5) in die Dosierschnecke (2) ein Druckmeßsensor (17) zur Regelung der Drehzahl der Förderschnecke (5) vorgesehen ist.

**10.** Vorrichtung nach den Ansprüchen 1 bis 9 oder einem derselben, **dadurch gekennzeichnet,** daß der Einfülltrichter (4) an seiner Oberseite mittels eines Beschickungsdeckels (21) gasdicht abschließbar ist.

**11.** Vorrichtung nach Anspruch 10, **dadurch gekennzeichnet,** daß unterhalb des Beschickungsdeckels (21) eine Absaugvorrichtung (19,20) angeordnet ist.

## Claims

**1.** Apparatus for feeding injection moulding and extruder units with a conveying and/or dosing worm (5), for example in extruders, or a piston ante-chamber, for example in piston injection moulding machines, with viscous or pasty materials, in particular synthetic materials containing glass fibres, such as for example polyester and polypropylene, with a filling hopper (4) and a conveying worm (5), the filling hopper being equipped as a body of rotation with a casing able to rotate about an axis of rotation and the conveying worm being guided through the body of rotation in the region of the inner surface of the casing and parallel thereto, the conveying worm opening directly into the dosing worm (2) or into the piston ante-chamber of the injection moulding unit (31), characterised in that the longitudinal axis (A) of the conveying worm (5) is arranged at the same angle of inclination ($\alpha$) as the pitch of the dosing worm (2) and the diameter (d) of the conveying worm (5) arranged at the angle of inclination ($\alpha$) corresponding to the pitch (g) of the dosing worm (2) according to the equation $d = g \times \cos \alpha$.

**2.** Apparatus according to Claim 1, characterised in that in its lower region, the conveying worm (5) is guided cylindrically in a bracket (15) until it opens into the dosing worm (2).

**3.** Apparatus according to Claim 2, characterised in that the cylindrical guidance of the conveying worm (5) amounts to approximately 1/3 of its total conveying length.

**4.** Apparatus according to Claims 1 to 3 or one of same, characterised in that the conveying worm (5) is provided with a conical tip (25), so that the tip (25) reaches close up to the dosing worm (2) and the surface (26) of the cone extends approximately parallel to the longitudinal axis (C) of the dosing worm (2).

**5.** Apparatus according to Claims 1 to 4 or one of same, characterised in that the axis (B) of the filling hopper (4) extends at right angles to the axis (C) of the dosing worm (2).

**6.** Apparatus according to Claims 1 to 5 or one of same, characterised in that the conveying worm (5) is supported to prevent bending by means of a feeding pocket (24) surrounding the latter in the manner of a half shell.

**7.** Apparatus according to Claims 1 to 6 or one of same, characterised in that the filling hopper (4), the bracket (15), the conveying worm (5) and the dosing worm (2) can be tempered.

**8.** Apparatus according to Claim 7, characterised in that the conveying worm (5) is provided with a heating cartridge (12) for internal tempering and the filling hopper (4), the bracket (15) and the dosing worm (2) are provided with heating jackets (13, 16, 14) for external tempering.

**9.** Apparatus according to Claims 1 to 8 or one of same, characterised in that a pressure-measuring sensor (17) for regulating the speed of the conveying worm (5) is provided where the conveying worm (5) opens into the dosing worm (2).

**10.** Apparatus according to Claims 1 to 9 or one of same, characterised in that the filling hopper (4) can be sealed in a gas-tight manner on its upper side by means of a feed cover (21).

**11.** Apparatus according to Claim 10, characterised in that a suction device (19, 20) is provided below the feed cover (21).

## Revendications

**1.** Dispositif destiné à alimenter des appareils de moulage par injection et par extrusion (par exemple la vis (5) d'alimentation et/ou de dosage d'une extrudeuse ou l'antichambre du piston d'une machine de moulage par injection) en une matière visqueuse ou pâteuse, notamment une matière plastique/telle qu'un polyester ou un polypropylène, armée de fibres de verre, dispositif comportant une trémie (4) de chargement et une vis (5) d'alimentation, cette trémie étant un corps rotatif à paroi pouvant tourner sur un axe de rotation et cette vis d'alimentation passant dans cette trémie rotative près de la face intérieure de la paroi de cette trémie, parallèlement à cette dernière, et débouchant directement, soit dans la vis doseuse (2), soit dans l'antichambre du piston de la machine de moulage par injection, ce dispositif étant caractérisé en ce que l'axe longitudinal (A) de la vis d'alimentation (5) est incliné sous le même angle (α) que les filets de la vis doseuse (2) et en ce que le diamètre (d) de cette vis d'alimentation, inclinée sous l'angle (α), est fonction du pas (g) de la vis doseuse (2) selon le rapport d = g x cosα.

2. Dispositif selon la revendication 1, caractérisé en ce que la vis d'alimentation (5) est logée à sa partie inférieure et jusqu'à son débouché dans la vis doseuse (2) dans un alésage cylindrique de guidage d'une console (15).

3. Dispositif selon la revendication 2, caractérisé en ce que l'alésage cylindrique de guidage de la vis d'alimentation (5) correspond au tiers environ de la longueur totale utile de cette vis.

4. Dispositif selon les revendications 1 à 3 ou selon l'une d'elles, caractérisé en ce que la vis d'alimentation (5) comporte une pointe (25) conique, disposée de façon à arriver jusqu'à la vis doseuse (2) et de façon que la surface (26) de la pointe soit sensiblement parallèle à l'axe longitudinal (C) de cette vis doseuse (2).

5. Dispositif selon les revendications 1 à 4, ou selon l'une d'elles, caractérisé en ce que l'axe (B) de la trémie de chargement (4) est perpendiculaire à l'axe (C) de la vis doseuse (2).

6. Dispositif selon les revendications 1 à 5 ou selon l'une d'elles, caractérisé en ce que la vis d'alimentation (5) est protégée du fléchissement par une cuvette d'introduction (24) en forme de demi-coque.

7. Dispositif selon les revendications 1 à 6 ou l'une d'elles, caractérisé en ce que la trémie de chargement (4), la console (15), la vis d'alimentation (5) et la vis doseuse (2) peuvent être chauffées par tempérage.

8. Dispositif selon la revendication 7, caractérisé en ce que la vis d'alimentation (5) comporte une cartouche chauffante (12) destinée à la chauffer par l'intérieur, et la trémie (4) de chargement, la console (15) et la vis doseuse (2) comportent des chemises chauffantes (13, 16, 14) destinées à les chauffer par l'extérieur.

9. Dispositif selon les revendications 1 à 8 ou selon l'une d'elles, caractérisé en ce qu'un capteur manométrique (17), destiné à régler la vitesse de rotation de la vis d'alimentation (5), est monté à l'emplacement où cette vis d'alimentation (5) débouche dans la vis doseuse (2).

10. Dispositif selon les revendications 1 à 9 ou selon l'une d'elles, caractérisé en ce que le dessus de la trémie de chargement (4) peut être obturé, de manière hermétique étanche au gaz, au moyen d'un couvercle (21);

11. Dispositif selon la revendication 10, caractérisé en ce qu'un dispositif d'aspiration (19, 20) est disposé au-dessous du couvercle (21).

Fig. 1

# Fig. 2

# Fig.3

EP 0 470 510 B1

FIG. 4

A

15

5

25

26

C

2

d

α

g